Europäisches Patentamt

European Patent Office

Office européen des brevets

(11) Veröffentlichungsnummer : **0 025 026
B1**

# EUROPÄISCHE PATENTSCHRIFT

(45) Veröffentlichungstag der Patentschrift :
**26.09.84**

(51) Int. Cl.³ : **G 01 F 1/66, G 01 P 5/00**

(21) Anmeldenummer : **80890079.9**

(22) Anmeldetag : **16.07.80**

(54) **Vorrichtung zur Messung der Strömungsgeschwindigkeit eines Fluids.**

(30) Priorität : **19.07.79 AT 5008/79**

(43) Veröffentlichungstag der Anmeldung :
**11.03.81 Patentblatt 81/10**

(45) Bekanntmachung des Hinweises auf die Patenterteilung : **26.09.84 Patentblatt 84/39**

(84) Benannte Vertragsstaaten :
**DE FR GB SE**

(56) Entgegenhaltungen :
**FR-A- 1 355 634
ELEKTROTECHNIK, Jahrgang 60, Nr. 10, Mai 1978, Seiten 35-36 Würzburg, DE. "Verschleiss- und wartungsfrei"
IRE TRANSACTIONS ON MEDICAL ELECTRONICS, Band 6, Dezember 1959, Seiten 204-206 New York, U.S.A. D.L. FRANKLIN et al.: "A pulsed ultrasonic flowmeter"**

(73) Patentinhaber : **ALEX. FRIEDMANN KOMMANDITGE-SELLSCHAFT
Am Tabor 6
A-1200 Wien (AT)**

(72) Erfinder : **Martin, Robert, Dipl.-Ing.
Mühlfeldgasse 15/44
A-1020 Wien (AT)**

(74) Vertreter : **Krause, Walter, Dr. Dipl.-Ing.
Margaretenstrasse 21
A-1040 Wien (AT)**

**Beschreibung**

Die Erfindung bezieht sich auf eine Vorrichtung zur Messung der Strömungsgeschwindigkeit eines Fluids, bei der ein von einem Schwingungsgenerator angesteuerter Schwingungserreger und ein Empfänger einander schräg zur Strömungsrichtung des Fluids gegenüberliegen, und eine Auswerteschaltung zur Ermittlung der Laufzeit der Schwingungen durch das Fluid vorgesehen ist.

Die DE-A-2 351 290 beschreibt ein Verfahren, bei dem einander schräg zur Strömungsrichtung des Fluids gegenüberliegende reziproke Ultraschall-Wandler wechselweise als Sender und Empfänger betrieben werden und die Zeit zwischen dem Aussenden eines Signals und dem Empfang desselben gemessen wird.

Eine Einrichtung zur Durchführung dieses Verfahrens umfaßt eine Auswerteschaltung, bei der eine Torschaltung vorgesehen ist, die während der Laufzeit eines Signals, also vom Zeitpunkt der Aussendung eines Signals bis zum Empfang desselben geöffnet ist und dabei die Verbindung von einem Oszillator zu einem Vorwärts-Rückwärtszähler durchschaltet. Dieser Vorwärts-Rückwärtszähler wird im Takt der Umsteuerung der reziproken Uztraschall-Wandler von Vorwärts- auf Rückwärtszähler und umgekehrt umgeschaltet. Der so bei zwei aufeinanderfolgenden Messungen ermittelte Differenzwert wird einem Speicher zugeführt und von diesem im Takt der Umsteuerung des Zählers und der Ultraschall-Wandler über einen Digital-Analog-Wandler einer Anzeige zugeführt.

Bei dieser bekannten Auswerteschaltung ergibt sich nicht nur der Nachteil eines sehr hohen Schaltungsaufwandes sondern auch der einer, insbesondere bei kürzeren Distanzen zwischen den Ultraschall-Wandlern, nur sehr begrenzten Genauigkeit. Letzteres ist durch den Impulsbetrieb der Ultraschallerzeuger bedingt, bei dem sich aufgrund der unvermeidlichen Einschwingungsvorgänge keine exakt bestimmbaren Impulsflanken ergeben und somit der Zeitpunkt des Eintreffens beim als Empfänger betriebenen Wandler nicht genau bestimmbar ist, weshalb sich Fehler ergeben, die bei kürzeren Distanzen zwischen den Ultraschall-Wandlern zu einer beträchtlichen Verfälschung des Meßergebnisses führen.

Ziel der Erfindung ist es, eine Vorrichtung der eingangs erwähnten Art vorzuschlagen, die sich durch einen geringen konstruktiven und schaltungsmäßigen Aufbau und eine hohe Genauigkeit auszeichnet.

Erfindungsgemäß wird dies dadurch erreicht, daß die Auswerteschaltung durch ein mit dem Empfänger und dem als Rechteckimpulsgenerator ausgebildeten, mit konstanter Frequenz arbeitenden Schwingungsgenerator eingangsseitig verbundenes exklusives OR-Glied und ein diesem nachgeschaltetes Tiefpaß-Filter sowie einer den Differenzwert zwischen einer Referenz- und der am Tiefpaß-Filter ermittelten Spannung bildenden Schaltung gebildet ist. Auf diese Weise wird die Phasenverschiebung zwischen der ausgesandten und der empfangenen Schwingung ermittelt, wodurch die obigen Nachteile vermieden werden und Einschwingungsvorgänge praktisch ohne Auswirkung bleiben und deshalb eine hohe Genauigkeit selbst bei geringen Abständen zwischen dem Schwingungserreger und dem Empfänger erreicht wird, wobei mit einem geringen schaltungstechnischen Aufwand das Auslangen gefunden wird.

Bereits bei der Befestigung des Schwingungserregers und des bzw. der Empfänger kann dafür gesorgt werden, daß die Schwingungen nicht direkt auf das Rohr übertragen werden, um eine von der Strömungsgeschwindigkeit des Fluids unabhängige Körperschalleitung zu vermeiden. Es ist weiters auch denkbar, daß in der Auswerteeinrichtung ein Glied vorgesehen wird, welches den mittels Körperschalleitung über das Rohr auf den Empfänger übertragenen Anteil der Schwingungen unterdrückt, der sich sowohl hinsichtlich seiner Amplitude als auch seiner Laufzeit von dem über das Fluid übertragenen Anteil unterscheidet.

Bei der Messung der Strömungsgeschwindigkeit von Medien, deren Eigenschaften hinsichtlich der Übertragung von Schwingungen, z. B. bei Temperaturänderungen, sich stark verändern, wie dies z. B. bei Gasen der Fall ist, ergeben sich Schwirigkeiten, wenn die am Ausgang des Tiefpaß-Filters anstehende Spannung, welche der gemessenen Laufzeit entspricht mit einer vorgegebenen einem eingespeicherten Referenzwert entsprechenden Referenzspannung verglichen wird. Um diese Schwierigkeiten zu vermeiden, ist bei einer erfindungsgemäßen Vorrichtung bei der der Schwingungserreger und der Empfänger durch reziproke Wandler gebildet sind, die wechselweise beaufschlagbar sind, nach einem weiteren Erfindungsmerkmal vorgesehen, daß eine elektronische Umschaltvorrichtung vorgesehen ist, welche den Rechteckimpulsgenerator wechselweise mit einem der reziproken Wandler und den jeweils anderen mit dem exklusiven OR-Glied verbindet und die über einen Frequenzteiler vom Rechteckimpulsgenerator gesteuert ist.

Durch diese einfachen Maßnahmen wird erreicht, daß die Referenzspannung, die jeweils bei der vorhergehenden Messung gewonnen wird, stets den physikalischen Gegebenheiten des Fluids entspricht, sodaß Änderungen der Temperatur oder des Druckes des Fluids, welche die Schalleitfähigkeit des Fluids beeinflussen, keine Auswirkungen auf das Meßergebnis haben. Dadurch wird eine weitere Erhöhung der Meßgenauigkeit erreicht.

Eine sehr einfache Schaltung zur Ermittlung der Differenz zwischen der Referenz- und der am Tiefpaß-Filter anstehenden Spannung zeichnet sich dadurch aus, daß sie durch einen dem Tiefpaß-Filter nachgeschalteten spannungsabhängigen Oszillator und eine mit diesem verbundene aus zwei antiparallel liegenden Gleichrichtern bestehende Gleichrichteranordnung, welche mit dem Frequenzteiler verbunden und im Takt mit der Umschalteinrichtung umsteuerbar ist, gebildet ist, der ein weiteres Tiefpaß-Filter nachgeschaltet ist.

Die Erfindung wird nun anhand der Zeichnung näher erläutert. Dabei zeigt :

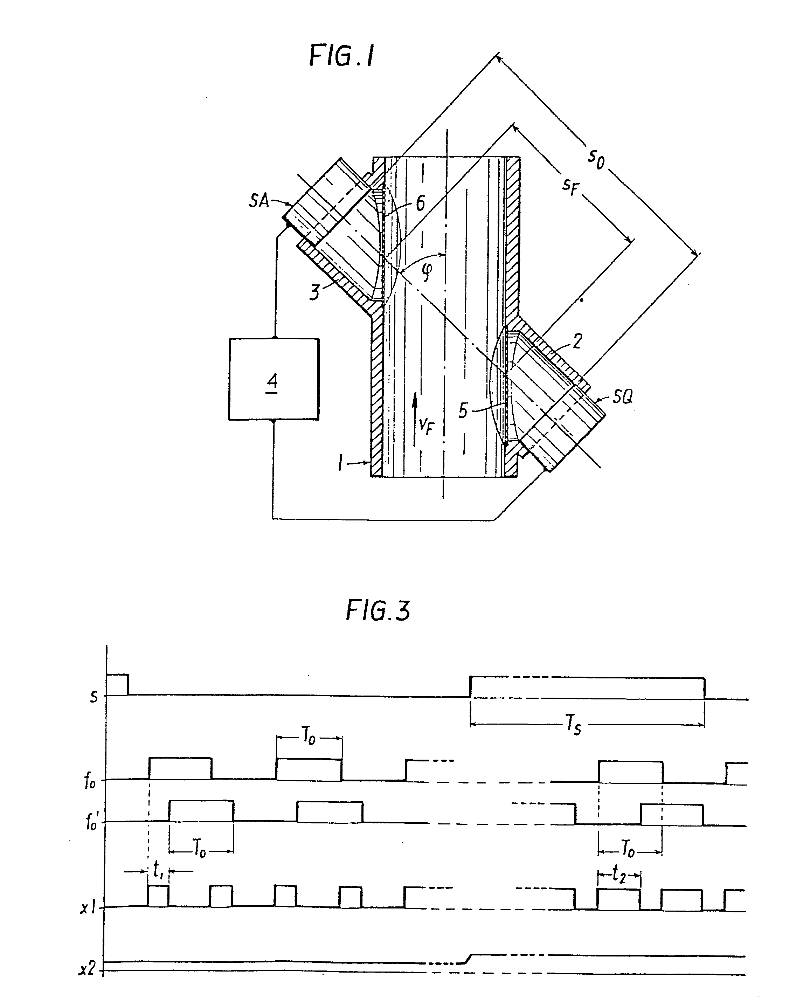

Figur 1 schematisch die Anordnung der Bauteile einer erfindungsgemäßen Meßeinrichtung,

Figur 2 ein Blockschaltbild einer erfindungsgemäßen Auswerteschaltung,

Figur 3 und 4 den Spannungsverlauf an verschiedenen Punkten des Blockschaltbildes gemäß Fig. 3.

Das Fluid strömt durch das Rohr 1, das mit Ansätzen 2, 3 versehen ist, deren gemeinsame Achse mit der Achse des Rohres 1 einen Winkel $\varphi$ einschließt. Für die Erfindung ist es jedoch keineswegs erforderlich, daß diese Achsen einander schneiden, sondern es genügt, daß sie sich überkreuzen.

In den Ansätzen 2 und 3 ist ein Schwingungserreger SQ, z. B. ein Ultraschallgeber bzw. ein Empfänger SA gehalten, wobei für eine Abkopplung des Erregers SQ und Empfängers SA vom Rohr 1 gesorgt ist.

An den Schwingungserreger SQ und den Empfänger SA ist eine Auswerteeinrichtung 4 angeschlossen, welche die Laufzeit der Schwingungen vom Erreger zum Empfänger mißt und mit einem Vergleichswert, z. B. der Laufzeit im ruhenden Medium vergleicht.

Das vom Schwingungserreger SQ ausgesendete Signal, z. B. eine andauernde sinusförmige Schwingung im Ultraschallbereich, gelangt durch eine Membrane 5 in das von dem vom Fluid mit der Strömungsgeschwindigkeit $v_F$ durchflossene Rohr 1 und anschliessend durch eine weitere Membrane 6 zum Empfänger SA. In dem im strömenden Medium verlaufenden Abschnitt des dabei zurückgelegten Weges addiert sich zur Schallgeschwindigkeit im ruhenden Fluid die in die Richtung der Schallausbreitung fallende Komponente der Strömungsgeschwindigkeit, sodaß die Laufzeit des Signals durch das strömende Fluid z. B. im Vergleich zur Laufzeit bei ruhendem Fluid verändert wird. Die mit 4 bezeichnete Auswerteeinrichtung stellt die Laufzeit des Signals aufgrund der entstehenden Phasendifferenz zwischen der gesendeten und der empfangenen Sinusschwingung fest. Diese ermittelte Laufzeit wird in der Auswerteeinrichtung 4 mit einem Vergleichswert verglichen und die Strömungsgeschwindigkeit des Fluids ermittelt.

Dabei gilt im Falle eines Vergleichs mit der Laufzeit im ruhenden Medium folgende Beziehung :

$$t = \frac{s_F}{v_F \cdot \cos \varphi + c_F} + \frac{s_o - s_F}{c_o}$$

$t$ : Laufzeit der Schallwelle von SQ nach SA
$s_o$ : Weglänge der Schallwelle von SQ nach SA
$s_F$ : Teil von $s_o$, der im strömenden Fluid verläuft
$c_F$ : Schallgeschwindigkeit im Fluid
$c_o$ : Schallgeschwindigkeit außerhalb des Fluids (z. B. Luft)
$v_F$ : Strömungsgeschwindigkeit des Fluids
$\varphi$ : Winkel zw. Strömungsrichtung des Fluids und dem Weg der Schallwelle von SQ nach SA.

Durch entsprechende Umformung obiger Gleichung ergibt sich :

$$v_F = \frac{s_F - c_F(t - k)}{\cos \varphi(t - k)}, \qquad (I')$$

wobei für die Konstante k der Wert

$$k = \frac{s_o - s_F}{c_o}$$

einzusetzen ist.

Zahlenbeispiel :

$s_o = 20$ cm
$s_F = 10$ cm
$\varphi = 25°$
$c_o = c_F = 333$ m/s
a) $v_F = 2$ m/s
    $t = 598{,}975$ µs : Laufzeit bei Strömung
b) $v_F = 0$
    $t = 600{,}600$ µs : Laufzeit ohne Strömung

Eine Strömung von Luft mit der Geschwindigkeit $v_F = 2$ m/s bewirkt also eine Verkürzung der Signallaufzeit um $t = 1{,}625$ µs, was sich bei einer Ultraschallfrequenz von 37 kHz als Phasenverschiebung von ca. 21 Grad bemerkbar macht und daher leicht zu messen ist.

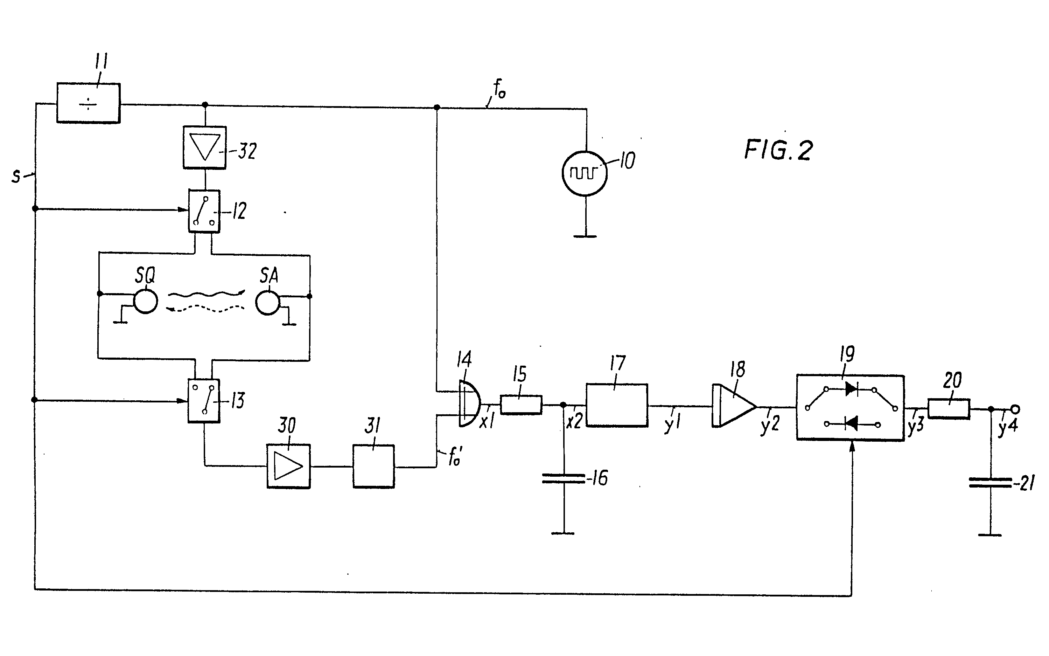

Außer der oben beschriebenen Auswertung durch Vergleich der gemessenen Laufzeit mit dem dem ruhenden Medium entsprechenden Wert der Laufzeit der Schwingungen besteht auch die Möglichkeit, die Laufzeit der Schwingungen in einander entgegengesetzten Richtungen zu messen und die Strömungsgeschwindigkeit des zu messenden Mediums aus dem Unterschied der in zwei einander entgegengesetzten Richtungen gemessenen Laufzeiten zu ermitteln. Ein Blockschaltbild einer nach dieser Variante des erfindungsgemäßen Verfahrens arbeitenden Auswerteeinrichtung ist in Fig. 2 dargestellt.

Bei der Ermittlung der Strömungsgeschwindigkeit des zu messenden Fluids aus zwei in einander entgegengesetzten Richtungen erfolgten Messungen der Laufzeit der Schwingungen im Fluid gelten folgende Beziehungen, wobei vorausgesetzt wird, daß die Ruhe-Schallgeschwindigkeit im strömenden Fluid und den zwischen dem Schwingungserreger SQ bzw. dem Empfänger SA und den Membranen 5 bzw. 6 befindlichen Medien gleich sind ; eine Bedingung also, die sehr leicht zu erfüllen ist durch den Einfluß des Fluids in die zwischen den Wandlern und den Membranen 5, 6 verbleibenden Räume.

$$t_1 = \frac{s_F}{c_F + v_F \cdot \cos \varphi} + \frac{s_o - s_F}{c_F} \qquad\qquad (I)$$

$$t_2 = \frac{s_F}{c_F - v_F \cdot \cos \varphi} + \frac{s_o - s_F}{c_F} \qquad\qquad (II)$$

Daraus ergibt sich :

$$v_F = \frac{G + \sqrt{G^2 + \frac{s_o^2}{t_1 \cdot t_2}}}{\cos \varphi} \qquad\qquad (III)$$

wobei für die Konstante G folgender Wert einzusetzen ist :

$$G = \frac{1}{2} \left\{ \frac{s_o}{2} \left( \frac{1}{t_1} - \frac{1}{t_2} \right) - \frac{2 \cdot s_o}{t_2 - t_1} \left[ 1 - \frac{s_o - s_F}{s_o} \cdot \frac{(t_1 + t_2)^2}{4\, t_1 t_2} \right] \right\} \qquad\qquad (IV)$$

Setzt man nun voraus, daß

$$\frac{s_o - s_F}{s_o} \ll \frac{4\, t_1 t_2}{(t_1 + t_2)^2} \qquad\qquad (V)$$

ist, was sich z. B. dadurch erreichen läßt, daß der Weg vom Sender zum Empfänger fast zur Gänze im strömenden Fluid verläuft und der außerhalb liegende Rest der Weglänge vergleichsweise sehr kurz ist, so kann zur Ermittlung der Strömungsgeschwindigkeit folgende Näherungsformel angewendet werden :

$$v_F = \frac{s_F}{2} \left( \frac{1}{t_1} - \frac{1}{t_2} \right) \qquad\qquad (VI)$$

Nach dieser Beziehung (VI) arbeitet der Schaltungsaufbau gemäß Fig. 2. Dieser Schaltungsaufbau besteht im wesentlichen aus dem Rechteckimpulsgenerator 10, der z. B. Impulse mit einer Frequenz von 10 bis 40 kHz liefert, einem Frequenzteiler 11, der die Frequenz des Generators 10 z. B. im Verhältnis von 1 : 100 teilt und die Umschalter 12, 13 z. B. Schmitt-Trigger ansteuert, einem exklusiven OR-Glied, welches die Generatorsignale $f_o$ mit den empfangenen und über einen Selektivverstärker 30 und einem Impulsformer 31 verstärkten und geformten Signalen $f_o'$ verknüpft, sowie einem dem exklusiven OR-Glied 14 nachgeschalteten Tiefpaß 15, 16, an dessen Ausgang bereits ein für die Strömungsgeschwindigkeit des zu messenden Fluids charakteristischer Spannungsverlauf x2 auftritt. Dieser wird im dargestellten Ausführungsbeispiel über einen spannungsgesteuerten Oszillator 17, der Rechteckimpulse mit variabler Frequenz abgibt, einen Integrator 18, den vom Frequenzteiler 11 gesteuerten Gleichrichter 19, der zwei antiparallel liegende Zweige, die abwechselnd durchschaltbar sind, aufweist, bzw. dessen Polarität am Ausgang umschaltbar ist, sowie einem weiteren Tiefpaß 20, 21 in ein der Strömungsgeschwindigkeit entsprechendes Gleichspannungssignal y4 umgewandelt.

Die vom Rechteckimpulsgenerator 10 erzeugten Signale $f_o$ gelangen zu einem Eingang des exklusiven OR-Gliedes 14, zum Eingang des Leistungsverstärkers 32 und zum Frequenzteiler 11. Der Ausgang des Leistungsverstärkers 32 ist über den elektronischen Umschalter 12 mit einem der beiden reziproken Wandler SQ, SA verbunden. Der zweite der beiden reziproken Wandler dient als Empfänger und wandelt die einlangenden Schwingungen in elektrische Signale $f_o'$ um, die über den zweiten elektronischen Umschalter 13 und den selektiven Verstärker 30 sowie den Pulsformer 31 dem zweiten Eingang des exklusiven OR-Gliedes 14 zugeführt werden.

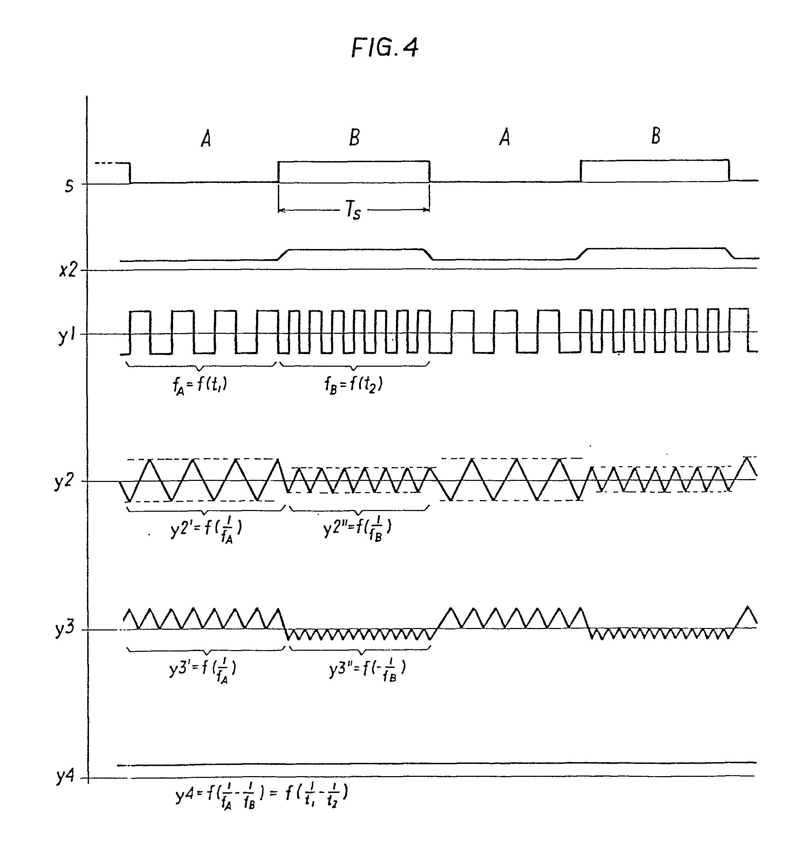

Der am Ausgang des Frequenzteilers 11 gewonnene Impulszug s (Fig. 3) schaltet gleichzeitig die beiden elektronischen Umschalter 12, 13 bei jeder Potentialänderung um, sodaß zwei aufeinanderfolgende Messungen der Laufzeit der Schwingungen in einander entgegengesetzten Richtungen erfolgen bzw. die Ansteuerung der reziproken Wandler als Schwingungserreger bzw. Empfänger gewechselt wird. Werden die Schwingungen einem strömenden Fluid überlagert, so ergeben sich, wie in Fig. 3 dargestellt, unterschiedlich große Phasenverschiebungen, $t_1$ bzw. $t_2$, zwischen den vom Generator 10 herrührenden Signalen $f_o$ und den empfangenen Signalen $f_o'$, die beide durch das exklusive OR-Glied 14 miteinander verknüpft werden und an dessen Ausgang daher ein Impulszug x1 mit der doppelten Frequenz von $f_o$ und unterschiedlichem Tastverhältnis — je nachdem, ob die Schwingungen schräg in oder schräg gegen die Strömungsrichtung des Fluids ausgesandt werden — erscheint.

Dieser Impulszug x1 wird durch den Tiefpaß 15, 16, dessen Zeitkonstante erheblich größer als die Impulsdauer $T_o$ eines Impulses des Impulszuges $f_o$ aber kleiner als die Impulsdauer $T_s$ eines Impulses des Impulszuges s ist, geglättet, wodurch der Impulszug x2 gewonnen wird (Fig. 3, 4). Das Potentialniveau dieses Impulszuges schwankt bei gleichbleibender Strömungsgeschwindigkeit des Fluids im Rhytmus des Impulszuges s, dem die Schaltzustände A und B der elektronischen Umschalter 12, 13 zugeordnet sind, indem einmal der eine und einmal der andere reziproke Wandler als Schwingungserreger SQ geschaltet und mit dem Generator 10 bzw. dem Leistungsverstärker 32 verbunden ist.

Dieser Impulszug x2 wird dem spannungsgesteuerten Oszillator 17 zugeführt, sodaß sich die Frequenz seiner Ausgangsimpulse y1 im Rhytmus der Potentialänderungen des Impulszugs x2 ändert. Die eine Frequenz $f_A$ der Impulse entspricht dabei der Laufzeit $t_1$ und die andere $f_B$ der Laufzeit $t_2$. Die am Ausgang des spannungsgesteuerten Oszillators 17 anstehenden Impulse y1 werden durch den nachgeschalteten Integrator 18 integriert, wodurch der angenähert Dreiecksimpulse unterschiedlicher Frequenz und Amplitude aufweisende Impulszug y2 gewonnen wird, dessen Abschnitte y2′ und y2″ der Funktion $1/f_A$ bzw. $1/f_B$ entsprechen. Dieser Impulszug y2 wird mittels des vom Frequenzteiler 19 bzw. dessen Ausgangsimpulsen s gesteuerten und zwei antiparallel liegende Gleichrichtsstrecken aufweisenden Gleichrichter 19, gleichgerichtet. Durch die Umschaltung der Gleichrichterstrecken im Rhytmus der Potentialänderungen des Impulszuges s wird, wir aus Fig. 4 ersichtlich, die Polarität am Ausgang des Gleichrichters 19 geändert, wobei diese Änderungen den Umsteuerungen der Wandler SQ, SA entsprechen. Die einzelnen Abschnitte y3′ und y3″ des so gewonnenen Impulszuges y3 entsprechen den Funktionen $+ 1/f_A$ bzw. $- 1/f_B$. Der Impulszug y3 wird dem Tiefpaß 20, 21 zugeführt und geglättet, wobei die Zeitkonstante des Tiefpasses 20, 21 viel größer als die Dauer $T_s$ eines Impulses des Impulszuges s ist, sodaß das Ausgangssignal y4 des Tiefpasses 20, 21 der Funktion $(1/f_A - 1/f_B)$ entspricht, die wieder der in der Gleichung (VI) angegebenen Funktion $(1/t_1 - 1/t_2)$ entspricht. Die in der Gleichung (VI) angegebene Konstante $s_F/2$ kann bei der Justierung eines das Signal y4 anzeigenden Instrumentes leicht berücksichtigt werden.

Für das Umschalten der Umschalter 12, 13 muß eine Frequenz gewählt werden, die zwar ausreichend niedrig ist, um für die Übertragungsstrecke und die Phasenmessung mittels des exklusiven OR-Gliedes 14 und den Tiefpaß 15, 16 abschnittweise stationäre Verhältnisse herzustellen, aber für das Tiefpaßglied 20, 21, z. B. ein Anzeigeninstrument, schnell genug ist, um die aufeinanderfolgende getrennte Anzeige der Ergebnisse der einzelnen Abschnitte zu verhindern.

Mit geringen Abänderungen läßt sich aufgrund der Messungen der Laufzeit der Schwingungen in einander entgegensetzten Richtungen auch der Wert für die Laufzeit im ruhendem Medium ermitteln und durch einen Vergleich mit einer der beiden Messungen die Strömungsgeschwindigkeit gemäß der bereits erläuterten Beziehung (I′) ermitteln.

Ferner ist es auch möglich, eine Auswertung gemäß der Beziehung (III) unter Einsatz der Konstanten gemäß der Formel (IV) vorzunehmen, wozu allerdings der Einsatz eines Mikroprozessors zweckmäßig sein dürfte.

## Ansprüche

1. Vorrichtung zur Messung der Strömungsgeschwindigkeit eines Fluids, bei der ein von einem Schwingungsgenerator angesteuerter Schwingungserreger und ein Empfanger einander schräg zur Strömungsrichtung des Fluids gegenüberliegen, und eine Auswerteschaltung zur Ermittlung der Laufzeit der Schwingungen durch das Fluid vorgesehen ist, dadurch gekennzeichnet, daß die Auswerteschaltung durch ein mit dem Empfänger (SA) und dem als Rechteckimpulsgenerator (10) ausgebildeten, mit konstanter Frequenz arbeitenden Schwingungsgenerator eingangsseitig verbundenes exklusives OR-Glied (14) und ein diesem nachgeschaltetes Tiefpaß-Filter (15, 16) sowie einer den Differenzwert zwischen einer Referenz- und der am Tiefpaß-Filter (15, 16) ermittelten Spannung bildenden Schaltung gebildet ist.

2. Vorrichtung nach Anspruch 1, bei der der Schwingungserreger und der Empfänger durch reziproke Wandler gebildet sind, die wechselweise beaufschlagbar sind, dadurch gekennzeichnet, daß eine elektronische Umschaltvorrichtung (12, 13) vorgesehen ist, welche den Rechteckimpulsgenerator (10) wechselweise mit einem der reziproken Wandler und den jeweils anderen mit dem exklusiven OR-

# 0 025 026

Glied (14) verbindet und die über einen Frequenzteiler (11) vom Rechteckimpulsgenerator (10) gesteuert ist.

3. Vorrichtung nach Anspruch 1 und 2, dadurch gekennzeichnet, daß die den Differenzwert bildende Schaltung durch einen dem Tiefpaß-Filter (15, 16) nachgeschalteten spannungsabhängigen Oszillator (17) und eine mit diesem verbundene, aus zwei antiparallel liegenden Gleichrichtern bestehende Gleichrichteranordnung (19), welche mit dem Frequenzteiler (11) verbunden und im Takt mit der Umschalteinrichtung (12, 13) umsteuerbar ist, gebildet ist, der ein weiteres Tiefpaß-Filter (20, 21) nachgeschaltet ist.

## Claims

1. A device for measuring the flow velocity of a fluid, in which an oscillator driven by an oscillation generator and a receiver are placed opposite of each other, their axis forming an acute angle with the flow direction of the fluid, and in which an evaluation unit is provided for measuring the travel time of the oscillations through the fluid, wherein said evaluation unit is made up of an exclusive OR element connecting on the input side the receiver and the said oscillation generator which is configured as a square wave generator with constant frequency, the said element being followed by a low-pass filter and a circuit for obtaining the voltage difference between a reference voltage and the low-pass output voltage.

2. A device according to claim 1, in which the oscillation generator and the receiver are configured as reciprocal transducers operating in an alternating manner, wherein an electronic switching device is provided which connects the square wave generator alternatingly with one of the reciprocal transducers while the other transducer is being connected to the exclusive OR element, and which switching device is driven by the square wave generator via a frequency divider.

3. A device according to claims 1 and 2, wherein the circuit for obtaining the voltage difference is composed of a voltage-dependent oscillator following the low-pass filter and a rectifier circuit connected to said oscillator, which circuit consists of two inversely poled rectifiers and which, being connected to said frequency divider, may be switched synchronously with said electronic switching device, the whole arrangement being followed by another low-pass filter.

## Revendications

1. Dispositif pour la mesure de la vitesse d'écoulement d'un fluide, dans lequel un excitateur de vibrations, commandé par un générateur de vibrations, et un récepteur, sont disposés face à face, transversalement à la direction d'écoulement du fluide, un montage de mesure étant prévu pour déterminer la durée des vibrations produites à travers le fluide, dispositif caractérisé en ce que le montage de mesure est constitué par un élément de porte « OU » exclusive (14), relié, du côté entrée, au générateur de vibrations à fréquence constante, constitué par un générateur d'impulsions rectangulaires (10), et par un filtre passe-bas (15, 16) monté en aval, ainsi qu'un montage formant la valeur de différence entre une tension de référence et la tension obtenue sur le filtre passe-bas (15, 16).

2. Dispositif suivant la revendication 1, dans lequel le générateur de vibrations et le récepteur sont formés par des convertisseurs réciproques qui peuvent être chargés alternativement, caractérisé par un dispositif commutateur électronique (12, 13) qui relie alternativement le générateur d'impulsions rectangulaires (10) avec l'un des convertisseurs réciproques et qui relie alors l'autre convertisseur avec l'élément de porte « OU » exclusive (14) et qui est commandé par le générateur d'impulsions rectangulaires (10) par l'intermédiaire d'un diviseur de fréquence (11).

3. Dispositif suivant l'une des revendications 1 et 2, caractérisé en ce que le montage qui forme la valeur de différence est constitué par un oscillateur (17) dépendant de la tension, monté en aval du filtre passe-bas (15, 16), par un ensemble redresseur (19) relié à l'oscillateur et comprenant deux redresseurs montés en relation anti-parrallèle, qui est relié au diviseur de tension (11), et qui est commutable en cadence avec le dispositif commutateur (12, 13), et qui est suivi par un filtre passe-bas (20, 21).

6

**FIG.1**

**FIG.3**

FIG.2

0 025 026

FIG. 4